# EUROPEAN PATENT SPECIFICATION

(11) **EP 3 261 746 B1**
(45) Date of publication and mention of the grant of the patent: **09.12.2020**
(21) Application number: 16707935.9
(22) Date of filing: 22.02.2016
(51) Int. Cl.: B01D 53/02, B01J 20/18, B01D 53/94, F01N 3/08, B01J 20/02

(54) **PASSIVE NOX ADSORBER**
PASSIVER NOX-ADSORBER
ADSORBEUR DE NOX PASSIF

(30) Priority: 26.02.2015 US 201562120976 P
(43) Date of publication of application: 03.01.2018
(73) Proprietor: Johnson Matthey Public Limited Company, London EC4A 4AB (GB)
(72) Inventor: CASCI, John Leonello, Royston Hertfordshire SG8 5HE (GB); COLLIER, Jillian Elaine, Royston Hertfordshire SG8 5HE (GB); LLOYD, Geraint Kingsley, Royston Hertfordshire SG8 5HE (GB)
(74) Representative: Lenden, Philip
(86) International application number: PCT/GB2016/050443
(87) International publication number: WO 2016/135465

(56) References cited:
- EP-A1- 0 727 567
- DE-U1-202012 012 866
- US-A- 5 157 198
- US-A- 5 192 727

## Description

### FIELD OF THE INVENTION

The invention relates to a passive NOₓ adsorber and its use in an exhaust system for internal combustion engines.

### BACKGROUND OF THE INVENTION

Internal combustion engines produce exhaust gases containing a variety of pollutants, including nitrogen oxides ("NOₓ"), carbon monoxide, and uncombusted hydrocarbons. These emissions are the subject of governmental legislation. Emission control systems are widely utilized to reduce the amount of these pollutants emitted to atmosphere, and typically achieve very high efficiencies once they reach their operating temperature (typically, 200°C and higher). However, these systems are relatively inefficient below their operating temperature (the "cold start" period).

For instance, current urea based selective catalytic reduction (SCR) applications implemented for meeting Euro 6b emissions require that the temperature at the urea dosing position be above about 180°C before urea can be dosed and used to convert NOₓ. NOₓ conversion below 180°C is difficult to address using the current systems, and future European and US legislation will stress the low temperature NOₓ storage and conversion. Currently this is achieved by heating strategies but this has a detrimental effect of CO₂ emissions.

As even more stringent national and regional legislation lowers the amount of pollutants that can be emitted from diesel or gasoline engines, reducing emissions during the cold start period is becoming a major challenge. Thus, methods for reducing the level of NOₓ emitted during cold start condition continue to be explored.

For instance, PCT Intl. Appl. WO 2008/047170 discloses a system wherein NOₓ from a lean exhaust gas is adsorbed at temperatures below 200°C and is subsequently thermally desorbed above 200°C. The NOₓ adsorbent is taught to consist of palladium and a cerium oxide or a mixed oxide or composite oxide containing cerium and at least one other transition metal.

U.S. Appl. Pub. No. 2011/0005200 teaches a catalyst system that simultaneously removes ammonia and enhances net NOₓ conversion by placing an ammonia-selective catalytic reduction ("NH₃-SCR") catalyst formulation downstream of a lean NOₓ trap. The NH₃-SCR catalyst is taught to adsorb the ammonia that is generated during the rich pulses in the lean NOₓ trap. The stored ammonia then reacts with the NOₓ emitted from the upstream lean NOₓ trap, which increases NOₓ conversion rate while depleting the stored ammonia.

EP 0727567 discloses an engine exhaust system for reducing the amount of hydrocarbons emitted during engine start-up (cold-start), before the catalytic converter has attained its effective operating temperature. The system includes a flow diverter, in particular a secondary air jet adapted to direct substantially all of the engine exhaust through a molecular sieve structure during cold-start, and to direct the engine exhaust stream directly from the light-off catalyst to the burnoff catalyst, bypassing the molecular sieve structure after light-off.

DE 20 2012 012866 discloses a methyl iodide adsorber comprising a zeolite containing at least one iodide adsorbing metal or a compound thereof, the zeolite being a hydrophobic zeolite, the zeolite being selected from the group consisting of AFI, AEL, BEA, CHA, EUO, FER, KFI , LTL, MAZ, MOR, MTW, OFF and TON, and wherein silver is contained as the iodide adsorbing metal.

US 5192727 discloses zeolite LZ-202 and other zeolites synthesized in the absence of organic templating agents and having a crystal structure isotypic with the mineral mazzite are subjected to a three-step treatment to greatly increase their surface area, catalytic activity and adsorptive capacity for adsorbates having molecular dimensions as large as the SF₆ molecule. The treatment steps involve an initial conventional NH₄⁺ ion-exchange, steaming at temperatures in excess of 300 °C. and a low-pH NH₄⁺ ion-exchange at pH values below 4.0.

US 5157198 discloses a process for isomerizing normal paraffins, particularly C₅-C₆, in the presence of at least one catalyst based on an omega zeolite having a molar ratio SiO₂/Al₂O₃ ranging from 6.5 to 80, a content by weight of sodium lower than 0.2%, crystalline parameters "a" and "c" respectively smaller than or equal to 1.814 nm and 0.760 nm, a capacity of adsorption of nitrogen, measured at 77K under a partial pressure of 0.19, higher than about 8% by weight, the catalyst also comprising at least one metal from group VIII of the periodic table of elements, preferably platinum or/and palladium.

PCT Intl. Appl. WO 2004/076829 discloses an exhaust-gas purification system which includes a NOₓ storage catalyst arranged upstream of an SCR catalyst. The NOₓ storage catalyst includes at least one alkali, alkaline earth, or rare earth metal which is coated or activated with at least one platinum group metal (Pt, Pd, Rh, or Ir). A particularly preferred NOₓ storage catalyst is taught to include cerium oxide coated with platinum and additionally platinum as an oxidizing catalyst on a support based on aluminum oxide. EP 1027919 discloses a NOₓ adsorbent material that comprises a porous support material, such as alumina, zeolite, zirconia, titania, and/or lanthana, and at least 0.1 wt% precious metal (Pt, Pd, and/or Rh). Platinum carried on alumina is exemplified. U.S. Appl. Pub. No. 2012/0308439 A1 teaches a cold start catalyst that comprises (1) a zeolite catalyst comprising a base metal, a noble metal, and a zeolite, and (2) a supported platinum group metal catalyst comprising one or more platinum group metals and one or more inorganic oxide carriers.

Co-pending U.S. Pat. No. US 2015/0158019 discloses a passive NOₓ adsorber (PNA) that comprises a noble metal and a small pore molecular sieve such as chabazite (CHA). Although noble metal/zeolite PNA catalysts such as Pd/CHA and Pd/Beta show good NOₓ storage performance and improved sulfur tolerance compared to non-zeolite PNAs, the temperature at which the NOₓ is released is too low for the downstream SCR component to convert all of the NOₓ to N₂.

As with any automotive system and process, it is desirable to attain still further improvements in exhaust gas treatment systems, particularly under cold start conditions. We have discovered a new passive NOₓ adsorber that provides enhanced cleaning of the exhaust gases from internal combustion engines. The new passive NOₓ adsorber not only increases the NOₓ release temperature but also increases the total NOₓ storage capacity.

### SUMMARY OF THE INVENTION

The invention is a passive NOₓ adsorber that is effective to adsorb NOₓ at or below a low temperature and release the adsorbed NOₓ at temperatures above the low temperature. The passive NOₓ adsorber comprises a first noble metal and a molecular sieve having a MAZ framework, and further comprising a flow-through substrate or filter substrate. The low temperature is 250 °C. The first noble metal is palladium. The invention also includes an exhaust system comprising the passive NOₓ adsorber, and a method for treating exhaust gas from an internal combustion engine utilizing the passive NOₓ adsorber.

### BRIEF DESCRIPTION OF THE DRAWING

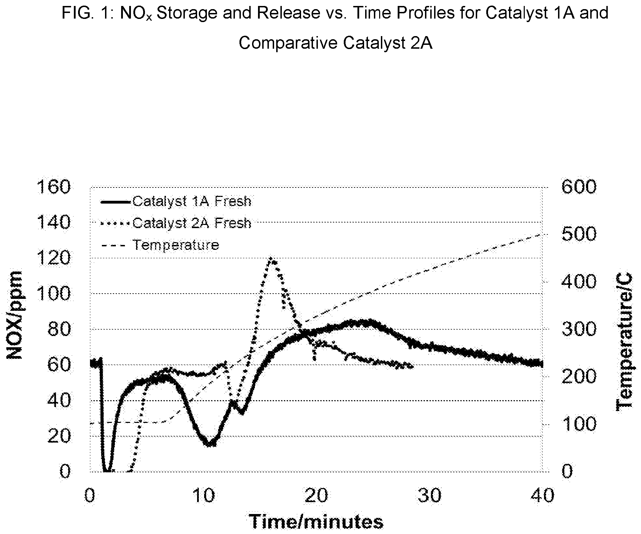

FIG. 1 shows the NOx storage and release vs. time profiles for a PNA of the invention and a comparative PNA.

### DETAILED DESCRIPTION OF THE INVENTION

The passive NOₓ adsorber of the invention is effective to adsorb NOₓ at or below a low temperature and release the adsorbed NOₓ at temperatures above the low temperature. The low temperature is 250°C. The passive NOₓ adsorber comprises a first noble metal and a molecular sieve having a MAZ Framework Type. The first noble metal is palladium.

The molecular sieve has a MAZ Framework Type and may be any natural or a synthetic molecular sieve, including zeolites, and is preferably composed of aluminum, silicon, and/or heteroatoms (e.g., Ga) and has a MAZ framework. The MAZ molecular sieve typically has a three-dimensional arrangement of TO₄ (T = Si, Al, Ga) units or tetrahedra that are joined by the sharing of oxygen atoms, and are characterised by a channel system based on a 1-dimensional 12-ring channel and an independent 3-dimensional 8-ring channel system. The designations such as 12-ring and 8-ring refer to the number of tetrahedral atoms (e.g., Si, Al) or oxygen atoms that make up a ring system. Molecular sieve frameworks are typically anionic, which are counterbalanced by charge compensating cations, typically alkali and alkaline earth elements (e.g., Na, K, Mg, Ca, Sr, and Ba), ammonium ions, and also protons. Other metals (e.g., Fe, Ti) may be incorporated into the framework of the MAZ molecular sieve to produce a metal-incorporated molecular sieve.

Preferably, the MAZ-framework molecular sieve is an aluminosilicate zeolite or a metal-substituted aluminosilicate zeolite. More preferably, the MAZ-framework molecular sieve is ZSM-4, LZ-202, mazzite, or omega zeolite.

The passive NOₓ adsorber may be prepared by any known means. For instance, the first noble metal may be added to the MAZ-framework molecular sieve to form the passive NOₓ adsorber by any known means, the manner of addition is not considered to be particularly critical. For example, a noble metal compound (such as palladium nitrate) may be supported on the molecular sieve by impregnation, adsorption, ion-exchange, incipient wetness, precipitation, spray drying, or the like. Alternatively, the noble metal may be added during molecular sieve synthesis. Other metals may also be added to the passive NOₓ adsorber.

The passive NOₓ adsorber further comprises a flow-through substrate or filter substrate. The flow-through or filter substrate is a substrate that is capable of containing catalyst components. The substrate is preferably a ceramic substrate or a metallic substrate. The ceramic substrate may be made of any suitable refractory material, e.g., alumina, silica, titania, ceria, zirconia, magnesia, zeolites, silicon nitride, silicon carbide, zirconium silicates, magnesium silicates, aluminosilicates, metallo aluminosilicates (such as cordierite and spudomene), or a mixture or mixed oxide of any two or more thereof. Cordierite, a magnesium aluminosilicate, and silicon carbide are particularly preferred.

The metallic substrates may be made of any suitable metal, and in particular heat-resistant metals and metal alloys such as titanium and stainless steel as well as ferritic alloys containing iron, nickel, chromium, and/or aluminum in addition to other trace metals.

The flow-through substrate is preferably a flow-through monolith having a honeycomb structure with many small, parallel thin-walled channels running axially through the substrate and extending throughout from an inlet or an outlet of the substrate. The channel cross-section of the substrate may be any shape, but is preferably square, sinusoidal, triangular, rectangular, hexagonal, trapezoidal, circular, or oval.

The filter substrate is preferably a wall-flow monolith filter. The channels of a wall-flow filter are alternately blocked, which allow the exhaust gas stream to enter a channel from the inlet, then flow through the channel walls, and exit the filter from a different channel leading to the outlet. Particulates in the exhaust gas stream are thus trapped in the filter.

The passive NOₓ adsorber may be added to the flow-through or filter substrate by any known means. A representative process for preparing the passive NOₓ adsorber using a washcoat procedure is set forth below. It will be understood that the process below can be varied according to different embodiments of the invention.

The pre-formed passive NOₓ adsorber may be added to the flow-through or filter substrate by a washcoating step. Alternatively, the passive NOₓ adsorber may be formed on the flow-through or filter substrate by first washcoating unmodified molecular sieve onto the substrate to produce a molecular sieve-coated substrate. Noble metal may then be added to the molecular sieve-coated substrate, which may be accomplished by an impregnation procedure, or the like.

The washcoating procedure is preferably performed by first slurrying finely divided particles of the passive NOₓ adsorber (or unmodified MAZ-framework molecular sieve) in an appropriate solvent, preferably water, to form the slurry. Additional components, such as transition metal oxides, binders, stabilizers, or promoters may also be incorporated in the slurry as a mixture of water soluble or water-dispersible compounds. If unmodified MAZ-framework molecular sieve is utilized in the slurry, a noble metal compound (such as palladium nitrate) may be added into the slurry in order to form the noble metal/MAZ-framework molecular sieve during the washcoating process.

The slurry preferably contains between 10 to 70 weight percent solids, more preferably between 20 to 50 weight percent. Prior to forming the slurry, the passive NOₓ adsorber (or unmodified MAZ-framework molecular sieve) particles are preferably subject to a size reduction treatment (e.g., milling) such that the average particle size of the solid particles is less than 20 microns in diameter.

The flow-through or filter substrate may then be dipped one or more times into the slurry or the slurry may be coated on the substrate such that there will be deposited on the substrate the desired loading of catalytic materials. If the first noble metal is not incorporated into the MAZ-framework molecular sieve prior to, or during, washcoating the flow-through or filter substrate, the molecular sieve-coated substrate is typically dried and calcined and then, the first noble metal may be added to the molecular sieve-coated substrate by any known means, including impregnation, adsorption, or ion-exchange, for example, with a noble metal compound (such as palladium nitrate).

The passive NOₓ adsorber coating can cover the total length of the substrate, or alternately can only cover a portion of the total length of the substrate such that only an inlet zone or outlet zone of passive NOₓ adsorber coating is formed. Preferably, the entire length of the substrate is coated with the passive NOₓ adsorber slurry so that a washcoat of the passive NOₓ adsorber covers the entire surface of the substrate.

After the flow-through or filter substrate has been coated with the passive NOₓ adsorber, and impregnated with noble metal if necessary, the coated substrate is preferably dried and then calcined by heating at an elevated temperature to form the passive NOₓ adsorber-coated substrate. Preferably, the calcination occurs at 400 to 600°C for approximately 1 to 8 hours.

Additionally, the passive NOₓ adsorber may further comprise a second molecular sieve catalyst. The second molecular sieve catalyst comprises a second noble metal and a second molecular sieve, wherein the second molecular sieve does not have an MAZ Framework Type. In this embodiment, the passive NOₓ adsorber may comprise one or more additional molecular sieve catalysts (e.g., a third molecular sieve catalyst and/or a fourth molecular sieve catalyst), provided that the additional molecular sieve(s) are different than the first and second molecular sieves.

The second noble metal is selected from platinum, palladium, rhodium, gold, silver, iridium, ruthenium, osmium, or mixtures thereof; preferably, it is selected from palladium, platinum, rhodium, or mixtures thereof. More preferably, the second noble metal is palladium.

The second molecular sieve is preferably a small pore molecular sieve having the Framework Type of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SFW, SIV, THO, TSC, UEI, UFI, VNI, YUG, and ZON, a medium pore molecular sieve having the Framework Type of MFI, FER, MWW, or EUO, a large pore molecular sieve having the Framework Type of CON, BEA, FAU, MOR, or EMT, as well as mixtures or intergrowths of any two or more. More preferably, the small pore zeolite is AEI or CHA, the medium pore zeolite is MFI, and the large pore zeolite is BEA.

The passive NOₓ adsorber containing the second molecular sieve catalyst may be prepared by processes well known in the prior art. The noble metal/MAZ-framework molecular sieve and the second molecular sieve catalyst may be physically mixed to produce the passive NOₓ adsorber. The passive NOₓ adsorber further comprises a flow-through substrate or filter substrate. In one embodiment, the noble metal/MAZ-framework molecular sieve and the second molecular sieve catalyst are coated onto the flow-through or filter substrate, and preferably deposited on the flow-through or filter substrate using a washcoat procedure to produce the passive NOₓ adsorber.

Suitable flow-through or filter substrates are described above, as well as procedures for washcoating the substrates with the noble metal/MAZ-framework molecular sieve and the second molecular sieve catalyst. The order of addition of the noble metal/MAZ-framework molecular sieve and the second molecular sieve catalyst onto the flow-through or filter substrate is not considered critical. Thus, the noble metal/MAZ-framework molecular sieve may be washcoated on the substrate prior to the second molecular sieve catalyst or the second molecular sieve catalyst may be washcoated on the substrate prior to the noble metal/MAZ-framework molecular sieve or both the noble metal/MAZ-framework molecular sieve and the second molecular sieve catalyst can be washcoated on the substrate simultaneously.

Preferably, the passive NOₓ adsorber comprises a first layer comprising the noble metal/MAZ-framework molecular sieve and a second layer comprising the second molecular sieve catalyst. Typically, the first layer may be disposed on a substrate and the second layer is disposed on the first layer. Alternatively, the second layer may be disposed on a substrate and the first layer disposed on the second layer.

In a separate embodiment, the passive NOₓ adsorber comprises a first zone comprising the noble metal/MAZ-framework molecular sieve and a second zone comprising the second molecular sieve catalyst. The first zone may be upstream of the second zone such that the first zone contacts the exhaust gas prior to the second zone, or alternatively the second zone may be upstream of the first zone such that the second zone contacts the exhaust gas prior to the first zone. Preferably, the second zone is located upstream of the first zone such that the exhaust gas contacts the second molecular sieve catalyst prior to contacting the first molecular sieve catalyst. The two zones may be on the same catalyst component (or catalyst brick), or the first zone comprising the noble metal/MAZ-framework molecular sieve may be located on a separate brick (or catalyst component) than the second zone comprising the second molecular sieve catalyst.

The invention also includes an exhaust system for internal combustion engines comprising the passive NOₓ adsorber. The exhaust system comprises one or more additional after-treatment devices capable of removing pollutants from internal combustion engine exhaust gases at normal operating temperatures. The exhaust system comprises the passive NOₓ adsorber and one or more other catalyst components selected from: (1) a selective catalytic reduction (SCR) catalyst, (2) a particulate filter, (3) a SCR filter, (4) a NOₓ adsorber catalyst, (5) a three-way catalyst, (6) an oxidation catalyst, or any combination thereof. The passive NOₓ adsorber is preferably a separate component from any of the above after-treatment devices. Alternatively, the passive NOₓ adsorber can be incorporated as a component into any of the above after-treatment devices.

These after-treatment devices are well known in the art. Selective catalytic reduction (SCR) catalysts are catalysts that reduce NOₓ to N₂ by reaction with nitrogen compounds (such as ammonia or urea) or hydrocarbons (lean NOₓ reduction). A typical SCR catalyst is comprised of a vanadia-titania catalyst, a vanadia-tungsta-titania catalyst, or a metal/zeolite catalyst such as iron/beta zeolite, copper/beta zeolite, copper/SSZ-13, copper/SAPO-34, Fe/ZSM-5, or copper/ZSM-5.

Particulate filters are devices that reduce particulates from the exhaust of internal combustion engines. Particulate filters include catalyzed particulate filters and bare (non-catalyzed) particulate filters. Catalyzed particulate filters (for diesel and gasoline applications) include metal and metal oxide components (such as Pt, Pd, Fe, Mn, Cu, and ceria) to oxidize hydrocarbons and carbon monoxide in addition to destroying soot trapped by the filter.

Selective catalytic reduction filters (SCRF) are single-substrate devices that combine the functionality of an SCR and a particulate filter. They are used to reduce NOₓ and particulate emissions from internal combustion engines. In addition to the SCR catalyst coating, the particulate filter may also include other metal and metal oxide components (such as Pt, Pd, Fe, Mn, Cu, and ceria) to oxidize hydrocarbons and carbon monoxide in addition to destroying soot trapped by the filter.

NOₓ adsorber catalysts (NACs) are designed to adsorb NOₓ under lean exhaust conditions, release the adsorbed NOₓ under rich conditions, and reduce the released NOₓ to form N₂. NACs typically include a NOₓ-storage component (e.g., Ba, Ca, Sr, Mg, K, Na, Li, Cs, La, Y, Pr, and Nd), an oxidation component (preferably Pt) and a reduction component (preferably Rh). These components are contained on one or more supports.

Three-way catalysts (TWCs) are typically used in gasoline engines under stoichiometric conditions in order to convert NOₓ to N₂, carbon monoxide to CO₂, and hydrocarbons to CO₂ and H₂O on a single device.

Oxidation catalysts, and in particular diesel oxidation catalysts (DOCs), are well-known in the art. Oxidation catalysts are designed to oxidize CO to CO₂ and gas phase hydrocarbons (HC) and an organic fraction of diesel particulates (soluble organic fraction) to CO₂ and H₂O. Typical oxidation catalysts include platinum and optionally also palladium on a high surface area inorganic oxide support, such as alumina, silica-alumina and a zeolite.

The passive NOₓ adsorber is preferably a separate component from any of the above after-treatment devices. Alternatively, the passive NOₓ adsorber can be incorporated as a component into any of the above after-treatment devices. For instance, a substrate may comprise and upstream zone of the passive NOₓ adsorber and a downstream zone of SCR catalyst on the same substrate.

The exhaust system can be configured so that the passive NOₓ adsorber is located close to the engine and the additional after-treatment device(s) are located downstream of the passive NOₓ adsorber. Thus, under normal operating conditions, engine exhaust gas first flows through the passive NOₓ adsorber prior to contacting the after-treatment device(s). Alternatively, the exhaust system may contain valves or other gas-directing means such that during the low temperature period (below a temperature ranging from about 150 to 220°C, preferably 200°C, about as measured at the after-treatment device(s)), the exhaust gas is directed to contact the after-treatment device(s) before flowing to the passive NOₓ adsorber. Once the after-treatment device(s) reaches the operating temperature (about 150 to 220°C, preferably 200°C, as measured at the after-treatment device(s)), the exhaust gas flow is then redirected to contact the passive NOₓ adsorber prior to contacting the after-treatment device(s). This ensures that the temperature of the passive NOₓ adsorber remains low for a longer period of time, and thus improves efficiency of the passive NOₓ adsorber, while simultaneously allowing the after-treatment device(s) to more quickly reach operating temperature. U.S. Pat. No. 5,656,244, for example, teaches means for controlling the flow of the exhaust gas during cold-start and normal operating conditions.

The invention also includes a method for treating exhaust gas from an internal combustion engine. The method comprises adsorbing NOₓ onto the passive NOₓ adsorber at temperatures at or below a low temperature, thermally desorbing NOₓ from the passive NOₓ adsorber at a temperature above the low temperature, and catalytically removing the desorbed NOₓ on a catalyst component downstream of the passive NOₓ adsorber. The low temperature is 250°C.

The catalyst component downstream of the passive NOₓ adsorber is a SCR catalyst, a SCR filter, a NOₓ adsorber catalyst, a three-way catalyst, or combinations thereof.

The following examples merely illustrate the invention.

### EXAMPLE 1: PREPARATION OF PASSIVE NOx ADSORBERS (PNAs) OF THE INVENTION

### Preparation of MAZ zeolite

A reaction gel (molar composition 60 SiO₂ : 3 Al₂O₃ : 12.5 Na₂O : 15 template : 3000 H₂O) is prepared in a 19 Liter autoclave, as follows. Colloidal silica (30%w/w colloidal silica; Grace Davison) is charged to autoclave and the stirrer is started at 300 rpm. Template (choline hydroxide; 46% aq. Solution) is then dispersed in 40% of the free water and charged to the autoclave. The required amounts of sodium aluminate (42.4% Na₂O, 54.9 % Al₂O₃; Alfa-Aesar) and sodium hydroxide are dissolved in 40% of the free water and charged to the autoclave. The charging line is then flushed through with remaining 20% of the free water. Once all the reagents are charged, the autoclave is sealed and then pressurized with nitrogen to about 20 psi (138 kPa) and the heating switched on with a set point of 150°C. The autoclave is left stirring at 150°C for approximately 3 days. After approximately 3 days at reaction temperature, the autoclave is cooled, vented and discharged. The resulting material is filtered under vacuum and washed using twice its volume of de-mineralized water. The resulting product is dried overnight at 110°C. Analysis by powder XRD indicates that the product is phase pure.

Prior to its use in catalyst preparation, the as-made zeolite is activated by calcining, in air, by heating to 110°C at 2°C/min then heated to 450°C at 5°C/min and held at 450°C for 16 hours. Finally the material is heated to 550°C at 5°C/min at held at 550°C for 16 hours. Once the material cools to room temperature, it is ion-exchanged with a 1 molar solution of ammonium chloride using 10 mL of solution per gram of calcined zeolite. The ion-exchange is carried out with stirring at room temperature for 1 hour. Agitation is stopped and the slurry centrifuged. The clear supernatant is decanted off. The ion-exchange procedure is then repeated following which the zeolite is centrifuged and washed (supernatant decanted off) then dried. The resulting NH₄-form zeolite is converted to the H-form by calcining, in air, by heating to 150°C at 2°C/min and holding at 150°C for 10 hours followed by heating to 450°C at 5°C/min with a final hold at 450°C for 16 hours. Analysis by XRF shows the H-form zeolite to have the composition: 9.2SiO₂ - Al₂O₃ - 0.01Na₂O.

### PNA 1A: 1 wt.% Pd/MAZ

Palladium is added to MAZ zeolite with a silica-to-alumina ratio (SAR) of 9.2 according to the following procedure to produce PNA 1A: The powder catalyst is prepared by wet impregnation of the zeolite using a soluble palladium compound as the precursor. After drying at 105°C, the sample is calcined at 500°C to provide the fresh catalyst, and a portion of the fresh catalyst is then hydrothermally aged at 750°C in an air atmosphere containing 10% H₂O. The Pd loading of PNA 1A is 1 wt.%.

### PNA 1B: 3% Pd/MAZ

PNA 1B is produced using the same procedure as PNA 1A with the exception that the amount of soluble palladium compound is increased to result in higher Pd loading. The Pd loading of PNA 1B is 3 wt.%.

### EXAMPLE 2: PREPARATION OF COMPARATIVE PNAs

### Comparative PNA 2A: 1 wt.% Pd/CHA

Comparative PNA 2A is produced using the same procedure as PNA 1A with the exception that a small pore chabazite (CHA) zeolite with a silica-to-alumina ratio (SAR) of 25 is used in place of MAZ. The Pd loading of Comparative PNA 2A is 1 wt.%.

### Comparative PNA 2B: 3 wt.% Pd/CHA

Comparative PNA 2B is produced using the same procedure as PNA 1B with the exception that a small pore chabazite (CHA) zeolite with a silica-to-alumina ratio (SAR) of 25 is used in place of MAZ. The Pd loading of Comparative PNA 2B is 3 wt.%.

### EXAMPLE 2: NOₓ STORAGE CAPACITY TESTING PROCEDURES

The catalyst (0.4 g) is held at the adsorption temperature of about 100°C for 5 minutes in an NO-containing gas mixture flowing at 2 liters per minute at a MHSV of 300 L * hr⁻¹ * g⁻¹. This adsorption stage is followed by Temperature Programmed Desorption (TPD) at a ramping rate of 17°C/minute in the presence of the NO-containing gas until the bed temperature reaches about 450°C in order to purge the catalyst of all stored NOₓ for further testing.

The NO-containing gas mixture during both the adsorption and desorption comprises 10 vol.% O₂, 60 ppm NO, 5 vol.% CO₂, 1500 ppm CO, 130 ppm C₃H₆, and 5 vol.% H₂O in N₂.

The NOₓ storage is calculated as the amount of NO₂ stored per liter of catalyst with reference to a monolith containing a catalyst loading of about 3 g/in³. The results at the different temperatures are shown in Table 1 and the NOx uptake and release profiles are shown in Figure 1.

The results at Table 1 show that the PNAs of the invention (PNA 1A and PNA 1B) store a greater amount of NOₓ compared to the Comparative PNAs over the entire testing period. Although at the initial 100°C storage period the NOx storage of the Pd/CHA samples was higher than that of the Pd/MAZ samples, during the temperature ramping period above 100°C the Pd/MAZ samples store more NOₓ than the comparative Pd/CHA samples as shown in Figure 1. Additionally, the Pd/MAZ catalysts release NOₓ over a broad temperature range and at a higher temperature than Pd/CHA as is also shown in Figure 1. The NOₓ release characteristics are maintained following hydrothermal aging as shown in Table 1.

**Table 1: NOₓ Storage Comparison Results**

| Catalyst | Zeolite | Pd loading | NOₓ storage capacity at 100°C until breakthrough¹ (g NO₂ / L) | NOₓ release onset temperature (°C) | NOₓ release peak temperature (°C) |
|---|---|---|---|---|---|
| 1A Fresh | MAZ | 1 wt% | 0.68 | 260 | 350 |
| 1B Fresh | MAZ | 3wt% | 1.13 | 260 | 350 |
| 2A Fresh | CHA | 1wt% | 0.51 | 230 | 260 |
| 2B Fresh | CHA | 3wt% | 0.70 | 260 | 330 |
| 1A Aged | MAZ | 1 wt% | 0.45 | 260 | 350 |
| 2A Aged | CHA | 1wt% | 0.64 | 220 | 255 |

| | | | | | |
|---|---|---|---|---|---|
| ¹ "Breakthrough" is defined as the temperature at which the concentration of NOₓ in the gas stream rises above the initial inlet value of 60 ppm. | | | | | |

## Claims

1. A passive NOₓ adsorber effective to adsorb NOₓ at or below a low temperature and release the adsorbed NOₓ at temperatures above the low temperature, said passive NOₓ adsorber comprising a first noble metal and a molecular sieve having a MAZ Framework Type, and further comprising a flow-through substrate or filter substrate; wherein the low temperature is 250°C; and
wherein the first noble metal is palladium.

2. The passive NOₓ adsorber of claim 1 wherein the molecular sieve having a MAZ Framework Type is selected from the group consisting of aluminosilicate zeolite and a metal-substituted aluminosilicate zeolite.

3. The passive NOₓ adsorber of claim 1 or claim 2 wherein the molecular sieve having a MAZ Framework Type is selected from the group consisting of ZSM-4, LZ-202, mazzite, and omega zeolite.

4. The passive NOₓ adsorber of any of claims 1 to 3 further comprising a second molecular sieve catalyst, wherein the second molecular sieve catalyst comprises a second noble metal and a second molecular sieve, wherein the second molecular sieve does not have an MAZ Framework Type.

5. The passive NOₓ adsorber of claim 4 wherein the second noble metal is selected from the group consisting of platinum, palladium, rhodium, gold, silver, iridium, ruthenium, osmium, and mixtures thereof.

6. The passive NOx adsorber of claim 5, wherein the second noble metal is palladium.

7. The passive NOₓ adsorber of claim 5 or claim 6 wherein the second molecular sieve is a small, medium or large pore molecular sieve selected from the group of Framework Type consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SFW, SIV, THO, TSC, UEI, UFI, VNI, YUG, ZON, BEA, and MFI, and intergrowths of two or more.

8. The passive NOx adsorber of claim 7, wherein the second molecular sieve is a small pore molecular sieve selected from the group Framework Type consisting of AEI and CHA.

9. The passive NOₓ adsorber of any of claims 4 to 8 having a first layer and a second layer wherein the first layer comprises palladium and the molecular sieve having a MAZ Framework Type and the second layer comprises the second molecular sieve catalyst.

10. The passive NOₓ adsorber of any of claims 4 to 8 having a first zone and a second zone wherein the first zone comprises palladium and the molecular sieve having a MAZ Framework Type and the second zone comprises the second molecular sieve catalyst.

11. An exhaust system for internal combustion engines comprising the passive NOₓ adsorber of any of claims 1 to 10 and a catalyst component selected from the group consisting a selective catalytic reduction (SCR) catalyst, a particulate filter, a SCR filter, a NOₓ adsorber catalyst, a three-way catalyst, an oxidation catalyst, and combinations thereof.

12. A method for reducing NOₓ in an exhaust gas, said method comprising adsorbing NOₓ onto the passive NOₓ adsorber of any of claims 1 to 10 at or below a low temperature, thermally desorbing NOₓ from the passive NOₓ adsorber at a temperature above the low temperature, and catalytically removing the desorbed NOₓ on a catalyst component downstream of the passive NOₓ adsorber, wherein the low temperature is 250°C.

13. The method of claim 12 wherein the catalyst component is selected from the group consisting a selective catalytic reduction (SCR) catalyst, a SCR filter, a NOₓ adsorber catalyst, a three-way catalyst, and combinations thereof.

## Patentansprüche

1. Passive NOₓ-Speichervorrichtung, die derart wirkt, dass sie bei oder unterhalb einer niedrigen Temperatur NOₓ adsorbiert und oberhalb der niedrigen Temperatur das adsorbierte NOₓ freisetzt, wobei die passive NOₓ-Speichervorrichtung ein erstes Edelmetall und ein Molekularsieb mit einem Gerüst vom Typ MAZ umfasst, wobei sie weiterhin ein Durchfluss-Substrat oder ein Filtersubstrat umfasst; wobei die niedrige Temperatur 250 °C beträgt; und
wobei es sich bei dem ersten Edelmetall um Palladium handelt.

2. Passive NOₓ-Speichervorrichtung nach Anspruch 1, wobei das Molekularsieb mit einem Gerüst vom Typ MAZ aus der Gruppe ausgewählt ist, welche aus Aluminosilikat-Zeolith und einem metallsubstituierten Aluminosilikat-Zeolith besteht.

3. Passive NOₓ-Speichervorrichtung nach Anspruch 1 oder Anspruch 2, wobei das Molekularsieb mit einem Gerüst vom Typ MAZ aus der Gruppe ausgewählt ist, die aus ZSM-4, LZ-202, Mazzit und omega-Zeolith besteht.

4. Passive NOₓ-Speichervorrichtung nach einem beliebigen der Ansprüche 1 bis 3, die weiterhin einen zweiten Molekularsiebkatalysator umfasst, wobei der zweite Molekularsiebkatalysator ein zweites Edelmetall und ein zweites Molekularsieb umfasst, wobei das zweite Molekularsieb kein Gerüst vom Typ MAZ hat.

5. Passive NOₓ-Speichervorrichtung nach Anspruch 4, wobei das zweite Edelmetall aus der Gruppe ausgewählt ist, die aus Platin, Palladium, Rhodium, Gold, Silber, Iridium, Ruthenium, Osmium und deren Mischungen besteht.

6. Passive NOₓ-Speichervorrichtung nach Anspruch 5, wobei es sich bei dem zweiten Edelmetall um Palladium handelt.

7. Passive NOₓ-Speichervorrichtung nach Anspruch 5 oder Anspruch 6, wobei es sich bei dem zweiten Molekularsieb um ein Molekularsieb mit kleinen, mittleren oder großen Poren handelt, welches aus der Gruppe von Gerüsttypen ausgewählt ist, die aus ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SFW, SIV, THO, TSC, UEI, UFI, VNI, YUG, ZON, BEA und MFI sowie Verwachsungen aus mindestens zweien besteht.

8. Passive NOₓ-Speichervorrichtung nach Anspruch 7, wobei es sich bei dem zweiten Molekularsieb um ein Molekularsieb mit kleinen Poren handelt, das aus der Gruppe von Gerüsttypen ausgewählt ist, welche aus AEI und CHA besteht.

9. Passive NOₓ-Speichervorrichtung nach einem beliebigen der Ansprüche 4 bis 8 mit einer ersten Schicht und einer zweiten Schicht, wobei die erste Schicht Palladium und das Molekularsieb mit dem Gerüst vom Typ MAZ umfasst und die zweite Schicht den zweiten Molekularsiebkatalysator umfasst.

10. Passive NOₓ-Speichervorrichtung nach einem beliebigen der Ansprüche 4 bis 8 mit einem ersten Bereich und einem zweiten Bereich, wobei der erste Bereich Palladium und das Molekularsieb mit dem Gerüst vom Typ MAZ umfasst und der zweite Bereich den zweiten Molekularsiebkatalysator umfasst.

11. Abgassystem für Verbrennungsmotoren, welches die passive NOₓ-Speichervorrichtung nach einem beliebigen der Ansprüche 1 bis 10 und einen Katalysatorbestandteil umfasst, der aus der Gruppe ausgewählt ist, welche aus einem Katalysator zur selektiven katalytischen Reduktion (SCR), einem Partikelfilter, einem SCR-Filter, einem NOₓ-Speicherkatalysator, einem Drei-Wege-Katalysator, einem Oxidationskatalysator und deren Kombinationen besteht.

12. Verfahren zur Verringerung von NOₓ in einem Abgas, wobei im Rahmen dieses Verfahrens NOₓ bei oder unterhalb einer niedrigen Temperatur an der passiven NOₓ-Speichervorrichtung nach einem beliebigen der Ansprüche 1 bis 10 adsorbiert wird, NOₓ bei einer Temperatur oberhalb der niedrigen Temperatur thermisch von der passiven NOₓ-Speichervorrichtung desorbiert wird und das desorbierte NOₓ an einem Katalysatorbestandteil, welcher der passiven NOₓ-Speichervorrichtung nachgeschaltet ist, katalytisch entfernt wird, wobei die niedrige Temperatur 250 °C beträgt.

13. Verfahren nach Anspruch 12, wobei der Katalysatorbestandteil aus der Gruppe ausgewählt ist, welche aus einem Katalysator zur selektiven katalytischen Reduktion (SCR), einem SCR-Filter, einem NOₓ-Speicherkatalysator, einem Drei-Wege-Katalysator und deren Kombinationen besteht.

## Revendications

1. Adsorbant passif de NOₓ efficace pour adsorber le NOₓ à ou au-dessous d'une température basse et pour libérer le NOₓ adsorbé à des températures au-dessus de la température basse, ledit adsorbant passif de NOₓ comprenant un premier métal noble et un tamis moléculaire présentant un type de structure MAZ et comprenant en outre un substrat à flux traversant ou un substrat filtrant ; la température basse étant de 250°C ; et le premier métal noble étant le palladium.

2. Adsorbant passif de NOₓ selon la revendication 1, le tamis moléculaire présentant un type de structure MAZ étant choisi dans le groupe constitué par une zéolithe d'aluminosilicate et une zéolithe d'aluminosilicate substitué par un métal.

3. Adsorbant passif de NOₓ selon la revendication 1 ou la revendication 2, le tamis moléculaire présentant un type de structure MAZ étant choisi dans le groupe constitué par une zéolithe de type ZSM-4, LZ-202, mazzite et oméga.

4. Adsorbant passif de NOₓ selon l'une quelconque des revendications 1 à 3, comprenant en outre un deuxième catalyseur de type tamis moléculaire, le deuxième catalyseur de type tamis moléculaire comprenant un deuxième métal noble et un deuxième tamis moléculaire, le deuxième tamis moléculaire ne présentant pas un type de structure MAZ.

5. Adsorbant passif de NOₓ selon la revendication 4, le deuxième métal noble étant choisi dans le groupe constitué par le platine, le palladium, le rhodium, l'or, l'argent, l'iridium, le ruthénium, l'osmium et leurs mélanges.

6. Adsorbant passif de NOₓ selon la revendication 5, le deuxième métal noble étant le palladium.

7. Adsorbant passif de NOₓ selon la revendication 5 ou la revendication 6, le deuxième tamis moléculaire étant un tamis moléculaire à petits pores, à pores moyens ou à grands pores, choisi dans le groupe de type de structure constitué par ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SFW, SIV, THO, TSC, UEI, UFI, VNI, YUG, ZON, BEA et MFI et des intercroissances de deux, ou plus, de ceux-ci.

8. Adsorbant passif de NOₓ selon la revendication 7, le deuxième tamis moléculaire étant un tamis moléculaire à petits pores choisi dans le groupe de type de structure constitué par AEI et CHA.

9. Adsorbant passif de NOₓ selon l'une quelconque des revendications 4 à 8, présentant une première couche et une deuxième couche, la première couche comprenant du palladium et le tamis moléculaire présentant un type de structure MAZ et la deuxième couche comprenant le deuxième catalyseur de type tamis moléculaire.

10. Adsorbant passif de NOₓ selon l'une quelconque des revendications 4 à 8, présentant une première zone et une deuxième zone, la première zone comprenant du palladium et le tamis moléculaire présentant un type de structure MAZ et la deuxième zone comprenant le deuxième catalyseur de type tamis moléculaire.

11. Système d'échappement pour moteurs à combustion interne, comprenant l'adsorbant passif de NOₓ selon l'une quelconque des revendications 1 à 10 et un constituant catalytique choisi dans le groupe constitué par un catalyseur de réduction catalytique sélective (SCR), un filtre particulaire, un filtre de SCR, un catalyseur adsorbant de NOₓ, un catalyseur à trois voies, un catalyseur d'oxydation et leurs combinaisons.

12. Procédé de réduction de NOₓ dans un gaz d'échappement, ledit procédé comprenant l'adsorption de NOₓ sur l'adsorbant passif de NOₓ selon l'une quelconque des revendications 1 à 10 à ou au-dessus d'une température basse, la désorption thermique de NOₓ de l'adsorbant passif de NOₓ à une température au-dessus de la température basse et l'élimination catalytique du NOₓ désorbé sur un constituant catalytique en aval de l'adsorbant passif de NOₓ, la température basse étant de 250°C.

13. Procédé selon la revendication 12, le constituant catalytique étant choisi dans le groupe constitué par un catalyseur de réduction catalytique sélective (SCR), un filtre de SCR, un catalyseur adsorbant de NOₓ, un catalyseur à trois voies et leurs combinaisons.
